Europäisches Patentamt

European Patent Office

Office européen des brevets

(11) Publication number: 0 386 363
A1

# EUROPEAN PATENT APPLICATION

(21) Application number: 89310835.7

(22) Date of filing: 20.10.89

(51) Int. Cl.⁵: G01P 15/10, G01P 15/08,
G01P 15/09

The title of the invention has been amended (Guidelines for Examination in the EPO, A-III, 7.3).

(30) Priority: 20.10.88 JP 264770/88

(43) Date of publication of application:
12.09.90 Bulletin 90/37

(84) Designated Contracting States:
DE FR GB

(71) Applicant: ATSUGI UNISIA CORPORATION
1370, Onna
Atsugi-shi Kanagawa-ken(JP)

(72) Inventor: Io, Shinichi
c/o ATSUGI UNISIA CORPORATION 1370,
Onna
Atsugi-shi Kanagawa-ken(JP)

(74) Representative: Blanco White, Henry Nicholas
et al
ABEL & IMRAY Northumberland House
303-306 High Holborn
London WC1V 7LH(GB)

(54) Sensor system for monitoring acceleration.

(57) A accelaration sensor system takes hybrid sensor arrangement which includes a low frequency range monitoring sensor and a high frequency range monitoring sensor. Both of the low frequency range monitoring sensor and a high frequency range monitoring sensor are connected to an electric circuit for supplying sensor signals thereof, which electric circuit selectively outputs one of the sensor signals as a sensor output. The electric circuit is set a boundary frequency for switching the low frequency monitoring sensor and the high frequency range monitoring sensor, which boundary frequency is set at a frequency within a frequency range where neither of sensor signals of the low frequency monitoring sensor and the high frequency range monitoring sensor is attenuated.

## FIG.3

EP 0 386 363 A1

## SENSOR SYSTEM FOR MONITORING KINETIC MOMENTUM

The present invention relates generally to a sensor system for monitoring kinetic energy exerted on an object and thus provides a signal representative of an acceleration of the motion of the object. More specifically, the invention relates to a kinetic momentum sensor system which can monitor both of low frequency range motion and high frequency range motion for facilitating wide frequency range motion monitoring capability.

In the automotive technologies, various sensors providing vehicular and vehicular component driving parameters for enabling various vehicular activity control, are provided. Amongst various parameters, an acceleration exerted on a vehicular body in vertical direction, lateral direction and longitudinal direction, is one of important parameter for suspension control, power distribution control, traction control and so forth. In order to monitor the acceleration, a kinetic momentum sensors have been employed. For example, Japanese Patent First (unexamined) Publications Nos. 57-16364 and 61-259175 proposes kinetic momentum sensors of the type which is applicable for the automotive vehicle. The former discloses a kinetic momentum sensor employing a permanent magnet and detector sensor element which converts variation of magnetic force caused by relative displacement between the permanent sensor into an electric signal magnitude. On the other hand, the latter discloses a piezoelectric element for producing an electric signal having a magnitude corresponding to strain thereof.

In either case, shortcoming is encountered in frequency range to monitor wide frequency range of the object motion. Namely, the former sensor comprising the permament magnet and the magnetic detector elements and monitoring relative distance therebetween, has a cut-off frequency at approximately 6 Hz. Therefore, the vibration frequency range to be monitored by means of the former type sensor is 0 to 6 Hz. This sensor encounters a difficulty in monitoring vibration at vibration frequency range higher than the cut-off frequency.

On the other hand, the latter sensor has cut-out frequencies at approximately 0.6 Hz and 7000 Hz to provide sensitive frequency range of 0.6 to 7000 Hz. This type of sensor cannot monitor vibration in a frequency range lower than the lower cut-off frequency. Furthermore, the latter piezoelectric sensor cannot monitor direct current component.

Therefore, the prior proposed kinetic momentum sensors are not at all complete in monitoring all necessary frequency range of vibrating motion of the object. Particularly, in case of application for automotive vehicle, limitation of the monitoring frequency range will cause limitation of the vehicular activity control.

Therefore, it is an object of the present invention to provide a kinetic momentum sensor which can monitor wide frequency range of vibrating motion of an object.

In order to accomplish aforementioned and other objects, a kinetic momentum sensor system, according to the present invention, takes hybrid sensor arrangement which includes a low frequency range monitoring sensor and a high frequency range monitoring sensor. A boundary frequency for switching the low frequency monitoring sensor and the high frequency range monitoring sensor is set at a frequency at which gain of either sensor output is not attenuated. The sensor system superimposes the sensor outputs of the low frequency range monitoring sensor and the high frequency range monitoring sensor to output a kinetic momentum indicative signal.

According to one aspect of the invention, a sensor assembly for monitoring kinetic momentum exerted on an object, comprises:

a first sensor responsive to a first frequency range of vibration of the object resulting from exertion of kinetic energy, for producing a first sensor signal representative of magnitude of vibration and whereby representative of magnitude of kinetic energy exerted on the object;

a second sensor signal responsive to a second frequency range of vibration of the object resulting from exertion of kinetic energy, which second frequency range is set at higher frequency range than the first frequency range with a partially overlapping frequency range, for producing a second sensor signal representative of magnitude of vibration and whereby representative of magnitude of kinetic energy exerted on the object; and

an electric circuit provided a boundary frequency set within the overlapping frequency range and outputting selected one of the first and second sensor signals as a sensor output.

The first sensor may comprise a permanent magnet forming a magnetic field therearound and a detector for detecting an intensity of magnetic field and whereby detecting relative position to the permanent magnet, and produces the first sensor signal according to variation of the intensity of the magnetic field. The kinetic momentum sensor assembly may further comprise an inertia weight means associated with the permanent magnet for causing vibration in response to kinetic energy exerted on the object.

On the other hand, the second sensor comprises a piezoelectric element. The electric circuit may comprise a low pass filter component for passing the sensor signal having a frequency lower than or equal to the boundary frequency and a high pass filter component for passing the sensor signal having a frequency higher than or equal to the boundary frequency.

In addition, the kinetic momentum sensor may further comprises a sensor casing defining an interior space, and the first and second sensors and the electric circuit are housed within the sensor casing.

The present invention will be understood more fully from the detailed description given herebelow and from the accompanying drawings of the preferred embodiment of the invention, which, however, should not be taken to limit the invention to the specific embodiment, but is for explanation and understanding only.

In the drawings:

Fig. 1 is a schematic block diagram of the preferred embodiment of a kinetic momentum sensor system according to the present invention;

Fig. 2 is a output circuit in the preferred embodiment of the kinetic momentum sensor system of Fig. 1;

Fig. 3 is a section showing a detailed construction of the preferred embodiment of the kinetic momentum sensor system of Fig. 1;

Fig. 4 is a chart showing output characteristics of the preferred embodiment of the kinetic momentum sensor system of Fig. 1; and

Figs. 5 and 6 are chart showing output characteristics of a low frequency range monitoring sensor and a high frequency range monitoring sensor in the preferred embodiment of the kinetic momentum sensor system of Fig. 1.

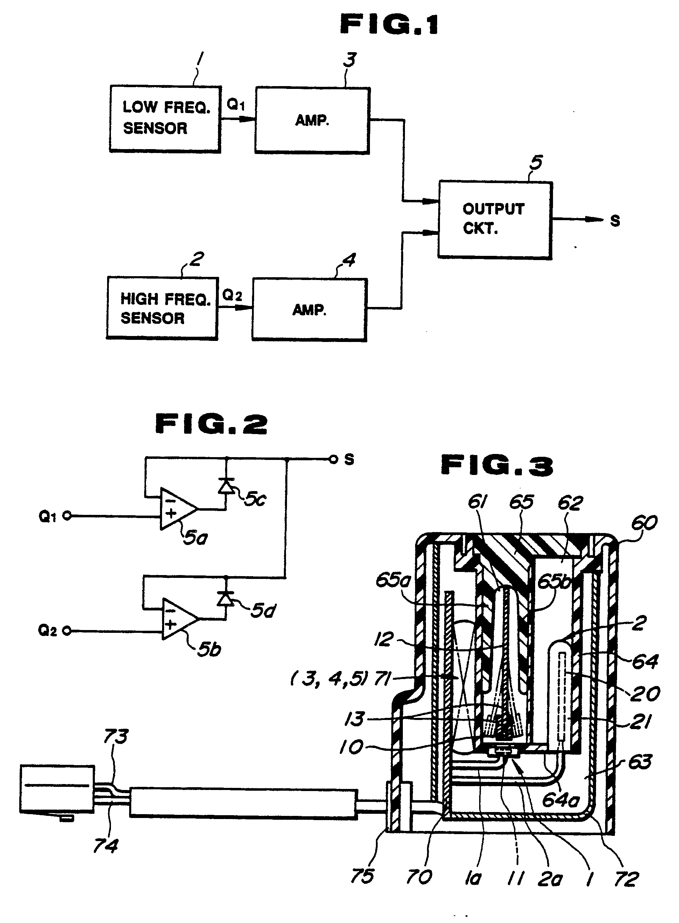

Referring now to the drawings, particularly to Fig. 1, the preferred embodiment of a kinetic momentum sensor system, according to the present invention, is schematically illustrated in a form of a block diagram. The preferred embodiment of the kinetic momentum sensor system includes a low frequency range monitoring sensor 1 and a high frequency range monitoring sensor 2. The low frequency range monitoring sensor 1 has an effective frequency range in a low frequency range, e.g. 0 to 6 Hz. On the other hand, the high frequency range monitoring sensor 2 is provided an effective frequency range at a high frequency range, e.g. 0.6 to 7000 Hz. Therefore, the sensors 1 and 2 in combination has effective frequency range extending over a range of 0 to 7000 Hz.

The low frequency range monitoring sensor 1 is responsive to relatively low frequency range of vibration of an object, such as a vehicular body, to produce a low frequency range vibration indicative sensor signal $Q_1$. The low frequency range vibra-

tion indicative sensor signal $Q_1$ is fed to a output circuit 5 via an amplifier 3. Similarly, the high frequency range monitoring sensor 2 is responsive to relative high frequency range of vibration of the object to produce a high frequency range vibration indicative sensor signal $Q_2$. The high frequency range vibration indicative sensor signal $Q_2$ is fed to the output circuit 5 via an amplifier 4. The output circuit 5 is set a boundary frequency $f_1$ in a frequency range where gains of the low frequency range monitoring sensor 1 and the high frequency range monitoring sensor 2 are not attenuated. In practice, the shown embodiment is set the boundary frequency $f_1$ in a range of 0.9 to 3 Hz.

Fig. 2 shows the preferred construction of the output circuit 5 to be employed in the preferred embodiment of the kinetic momentum sensor system of Fig. 1. The output circuit 5 includes operational amplifiers 5a and 5b which receive noninverting terminals thereof. The outputs of the operational amplifiers 5a and 5b are coupled to each other and fed to an output terminal via diodes 5c and 5d. The output circuit 5 constructed as shown serves as a low pass filter for the low frequency range vibration indicative sensor signal $Q_1$ for passing the sensor signal below the boundary frequency $f_1$. Also, the output circuit 5 also serves as a high pass filter for the high frequency range vibration indicative sensor signal $Q_2$ to pass the sensor signal at the frequency range above the boundary frequency $f_1$. Therefore, the output circuit 5 selectively outputs one of the low frequency range vibration indicative sensor signal $Q_1$ and the high frequency range vibration indicative sensor signal $Q_2$ as an output signal S.

Fig. 3 shows the detailed construction of the preferred embodiment of the kinetic momentum sensor system according to the present invention.

The preferred embodiment of the sensor system is housed within a sensor casing 60 which is formed of a magnetically insulative material, such as a synthetic resin and into an essentially cylindrical form. The sensor casing 60 has axially extending partitions 64a and 64b for defining separated chambers 61, 62 and 63. The chamber 61 is filled with a damper fluid. A magnetically insulative lid member 65 is fitted on the upper opening end. The lid member 65 had an extension including partitioning wall sections 65a and 65b disposed within the chamber 61 to define therebetween an section U-shaped clearance.

The low frequency range monitoring sensor 1 comprises a permanent magnet 10 and a Hall element 11 which serves as a detector element. The low frequency range monitoring sensor 1 converts the low frequency range vibration indicative sensor signal $Q_1$ by converting relative displacement between the permanent magnet 10 and the Hall element 11 into an electric signal magnitude. The permanent magnet 10 is supported by means of a resiliently deformable support plate 12 which is made of a magnetically insulative material, such as phosphor bronze. The support plate 12 is suspended from the lid member 65 and disposed between the clearance between the partitioning wall sections 65a and 65b. The permanent magnet 10 is rigidly secured onto the lower end of the support plate 12 by means of a magnetically conductive weight member 13. The magnetic poles, i.e. N pole and S pole, of the permanent magnet 10 is oriented at opposite side with respect to the direction of vibration of the support plate 12 as illustrated by the phantom line.

The Hall element 11 is mounted on a horizontally extending wall section 64c of the partition 64a and is oriented at a position to oppose to the permanent magnet 10 at the neutral or initial position as illustrated by solid line. Since the relative distance between the permanent magnet 10 and the Hall element 11 is thus minimum at the neutral position of the permanent magnet 10. Therefore, the magnetic flux intensity subjecting to the Hall element 11 becomes maximum. When kinetic energy is exerted, the support plate 12 with the permanent magnet 10 to cause relative displacement with respect to the Hall element 11, the magnetic flux intensity varies from that at the neutral position of the permanent magnet.

On the other hand, the high frequency range monitoring sensor 2 is disposed within the chamber 62 and includes a piezoelectric element 20 which is composed of a bimolph element, which is responsive to vibration resulting from exertion of the kinetic energy, to produce an electric output signal $Q_2$ having a magnitude corresponding to the vibration magnitude. The piezoelectric element 20 is covered by a synthetic resin casing 21 which is fixed to the partition 64a. The piezoelectric element 20 is so oriented as to cause vibration in a direction same to the vibrating direction of the permanent magnet.

The amplifiers 3 and 4, the output circuit 5 are composed of a unit 71 comprises electric elements and hybrid integrated circuits (HIC) and so forth and assembled to a printed circuit board 70. The printed circuit board 70 is disposed within a chamber 63. The low frequency range monitoring sensor 1 and the high frequency range monitoring sensor 2 are covered by a magnetic shield 72 in order to be isolated from the environmental magnetic fields. The magnetic shield 72 is secured within the sensor casing 60. The printed circuit 70 is supported within the chamber 63 by the magnetic shield 72. The printed circuit board 70 is connected to the low frequency range monitoring sensor 1 and the high frequency range monitoring sensor 2 via lead cables 2a and 3a, to a power source via a power source wiring 74 and an external circuit via an output wiring 73. As can be seen from Fig. 3, the power source wiring 74 and the output wiring 73 extends into the interior of the sensor casing 60 via a grommet 75 which is fixed onto the peripheral wall of the sensor casing.

The kinetic momentum sensor thus constructed is mounted on the object with orienting the low and high frequency ranges monitoring sensors 1 and 2 to vibrate in response to acceleration exerted in a desired direction. Namely, in case that the object is a vehicular body, the kinetic momentum sensor is mounted on the vehicle body horizontally oriented the sensors 1 and 2 for moving in a vertical direction when the acceleration to be monitored is a vertical acceleration exerted on the vehicle body. On the other hand, when the acceleration to be monitored is lateral or longitudinal acceleration, the sensors 1 and 2 are vertically oriented for movement in lateral or longitudinal direction with respect to the vehicle body axis.

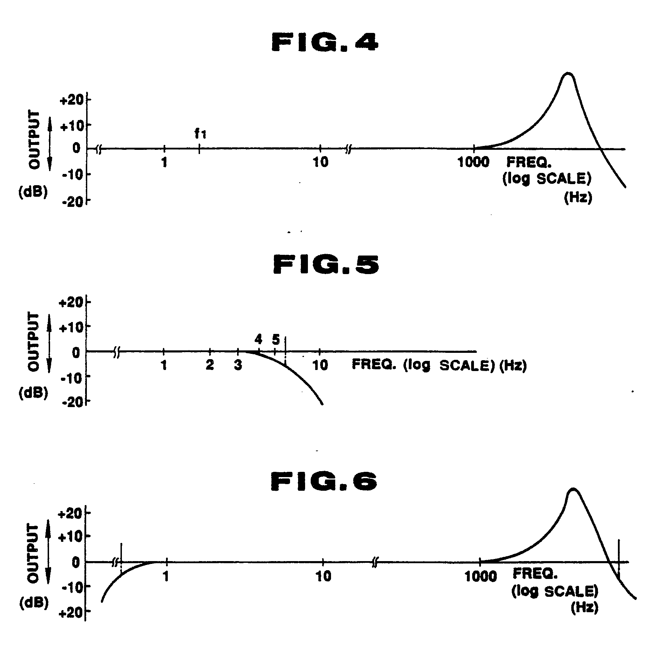

By supplying the electric power via the power source wiring 74, the low and high frequency ranges monitoring sensors 1 and 2 becomes active to produce the low frequency range vibration indicative sensor signal $Q_1$ and the high frequency range vibration indicative sensor signal $Q_2$ depending upon frequency and magnitude of vibration caused by the acceleration to be monitored and exerted on the object. The sensor signals $Q_1$ and $Q_2$ are supplied to the output circuit 5 via the amplifiers 3 and 4. The output circuit 5 selects one of the sensor signals $Q_1$ and $Q_2$ which are respectively shown in Figs. 5 and 6, with respect to the boundary frequency $f_1$ to produce the output signal S as illustrated by Fig. 4. Therefore, as can be appreciated, the output signal S can have wide frequency range extending between a direct current component (substantially zero frequency) to high frequency component.

Since the shown embodiment of the kinetic momentum sensor houses both of the low and high frequency ranges monitoring sensors and sensor circuit within a sensor casing, overall size would becomes equivalent to that of the single frequency range sensor. However, if necessary, the low and high frequency ranges monitoring sensors can be housed within separate casings for convenience of installation.

As will be appreciated herefrom, the present invention fulfills all of the objects and advantages sought therefor.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

For example, it would be possible to neglect the amplifiers amplifying the outputs of respective low and high frequency range monitoring sensors and to use a single amplifier at the output of the output circuit for amplifying the output of the output circuit.

## Claims

1. A sensor assembly for monitoring kinetic momentum exerted on an object, comprising:
a first sensor responsive to a first frequency range of vibration of said object resulting from exertion of kinetic energy, for producing a first sensor signal representative of magnitude of vibration and whereby representative of magnitude of kinetic energy exerted on said object;
a second sensor signal responsive to a second frequency range of vibration of said object resulting from exertion of kinetic energy, which second frequency range is set at high frequency range than said first frequency range with a partially overlapping frequency range, for producing a second sensor signal representative of magnitude of vibration and whereby representative of magnitude of kinetic energy exerted on said object; and
and electric circuit provided a boundary frequency set within said overlapping frequency range and outputting selected one of said first and second sensor signals as a sensor output.

2. A kinetic momentum sensor assembly as set forth in claim 1, wherein said first sensor comprises a permanent magnet forming a magnetic field therearound and a detector for detecting an intensity of magnetic field and whereby detecting relative position to said permanent magnet, and produces said first sensor signal according to variation of said intensity of the magnetic field.

3. A kinetic momentum sensor assembly as set forth in claim 2, which further comprises an inertia weight means associated with said permanent magnet for causing vibration in response to kinetic energy exerted on said object.

4. A kinetic momentum sensor assembly as set forth in claim 1, wherein said sensor sensor comprises a piezoelectric element.

5. A kinetic momentum sensor assembly as set forth in claim 1, wherein said electric circuit comprises a low pass filter component for passing said sensor signal having a frequency lower than or equal to said boundary frequency and a high pass filter component for passing said sensor signal having a frequency higher than or equal to said boundary frequency.

6. A kinetic momentum sensor assembly as set forth in claim 1, which further comprises a sensor casing defining an interior space, and said first and second sensors and said electric circuit are housed within said sensor casing.

# FIG.1

| LOW FREQ. SENSOR | $Q_1$ → | AMP. |
| --- | --- | --- |

1 ... 3

OUTPUT CKT. → S

5

| HIGH FREQ. SENSOR | $Q_2$ → | AMP. |
| --- | --- | --- |

2 ... 4

# FIG.2

S

$Q_1$ ○ ...... 5c
5a

$Q_2$ ○ ...... 5d
5b

# FIG.3

61  65  62

60

65a  65b

12

2

64

(3, 4, 5) 71

20

13

21

10

63

64a

73

74

75  70  1a  11  2a  1  72

# FIG. 4

# FIG. 5

# FIG. 6

European Patent
Office

**EUROPEAN SEARCH REPORT**

 Application Number

EP 89 31 0835

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 146 775 (FERRANTI) <br> * Page 1, lines 5-29,53-129; page 2, lines 23-109; page 3, lines 30-61; figures 1,2 * | 1,4-6 | G 01 P 15/10 <br> G 01 P 15/08 <br> G 01 P 15/09 |
| Y | --- | 2,3 | |
| Y | FR-A-2 481 457 (BOSCH) <br> * Page 1, line 30 - page 2, line 6; figure 1 * <br> ----- | 2,3 | |

TECHNICAL FIELDS
SEARCHED (Int. Cl.5)

G 01 P

The present search report has been drawn up for all claims

| Place of search | Date of completion of the search | Examiner |
|---|---|---|
| THE HAGUE | 25-04-1990 | ROBINSON M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)